# EUROPÄISCHE PATENTANMELDUNG

(11) **EP 1 134 599 A1**
(43) Veröffentlichungstag der Anmeldung: **19.09.2001**
(21) Anmeldenummer: 00440079.2
(22) Anmeldetag: 17.03.2000
(51) Int. Cl.: G02B 6/30

(54) **Integrierte Justagestruktur für auf optisches Modul auszurichtende Glasfaser**

(71) Anmelder: ALCATEL, 75008 Paris (FR)
(72) Erfinder: Ambrosy, Anton, Dr., 75233 Tiefenbronn (DE); Schneider, Sigrun, 71732 Tamm (DE); Ruess, Karin, 70184 Stuttgart (DE)
(74) Vertreter: Menzietti, Domenico, Dipl.-Ing

(57) **Zusammenfassung**

Das optische Modul 1, das oft als Optohybride bezeichnet wird, ist aus einem Träger hergestellt, der meistens aus einer Siliziumscheibe 9 besteht. Dieser Träger wird mit einem Schichtaufbau verschieden dotierter Silikatgläser (SiO₂, SiON, ...) für optische Anwendungen bedeckt, in der unter anderem eine integrierte Justagestruktur 2 für eine darauf auszurichtende Glasfaser 3 strukturiert wird. Die integrierte Justagestruktur 2 besteht aus einer Nut 4, die bis in der Siliziumscheibe 9 geätzt wurde, wobei die Nut 4 als Führung für die einzusetzende Glasfaser 3 dient. Die Nut 4 ist im Querschnitt U-förmig ausgebildet, und weist zwei äußere Kanten 5a, 5b, die parallel zu der darin einzusetzenden Glasfaser 3 verlaufen und als Führungslinie mit letzterem dient. Die durch einen speziellen Herstellungsprozess hergestellten selbstjustierenden Kanten 5a, 5b sind auf eine im optischen Modul 1 als Wellenleiter 7 dienende integrierte Komponente ausgerichtet. Somit wird eine sehr gute Kopplung der Glasfaser 3 mit dem Wellenleiter 7 gewährleistet.

## Beschreibung

Die Erfindung bezieht sich auf ein optisches Modul sowie ein Verfahren zur Herstellung eines optischen Moduls.

Optische Module gehören zum Stand der Technik. Eins der Hauptprobleme, das bei dem Aufbau von solchen Modulen gelöst sein muss, betrifft die Ausrichtung der Wellenleiter der unterschiedlichen optischen Komponenten, die in optische Module eingebaut oder strukturiert werden. Dies ist von besonderer Wichtigkeit, wenn eine hochqualitative optische Kopplung erzielt werden soll. Die optischen Wellenleiter sind sehr klein dimensioniert, z.B. werden für Singlemode-Anwendungen Wellenleiterquerschnitte im Bereich von 5 *µ*m hergestellt, die mehrere mm oder cm lang sein können. Zu einem solchen Leiter muss eine Glasfaser ausgerichtet werden; diese hat einen ähnlich kleinen Kernquerschnitt typischerweise im Bereich von 50 - 100 *µ*m², oder sogar weniger. Das Problem besteht deshalb darin, solche Wellenleiter mit sehr kleinen Abmessungen auszurichten.

Optische Module sind meistens auf einer als Träger dienenden Siliziumscheibe (Si-Wafer) aufgebaut. Optische Wellenleiter werden auf solche Siliziumscheibe, unter anderem durch einen Schichtaufbau verschieden dotierter Silikatgläser (SiO₂, SiON, ...), gebildet. Ein Beispiel hierfür ist in EP 99 400 921.5 gezeigt. Insbesondere Fig. 4 dieser Patentanmeldung zeigt deutlich, wie zwei zueinander auszurichtende Wellenleiter positioniert werden. Dabei ist einer dieser Wellenleiter eine Glasfaser. Sie wird entsprechend in eine V-förmige Nut des Trägers eingesetzt, mit dem Ziel ihre optische Achse an der Achse einer zweiten, auf dem Träger einzusetzenden Komponente auszurichten.

Um jegliche Verluste von Signalen bei der Kopplung der zwei Komponenten, d.h. einerseits der Glasfaser, andererseits der dazu ausgerichteten Komponente (optische Wellenleiter), zu vermeiden, müssen deren Positionierungen zueinander sehr genau festgelegt werden. Es zeigt sich aber, dass eine V-förmige Nut keine hinreichend zufriedenstellende Lösung ist. In der Tat ist die Lage der Nut abhängig von der Kristallorientierung des Trägers, d.h. der Siliziumscheibe. Hierfür muss ein zusätzlicher Ätzschritt ausgeführt werden, um sie zu bestimmen. Dies ist dadurch bedingt, dass die Kristallorientierung der Ebene der Siliziumscheibe (Waferflat) nicht präzis genug kontrollierbar ist.

Zudem werden solche V-förmigen Nuten nasschemisch, z.B. mittels einer KOH-Lösung hergestellt. Dieser nasschemische Prozess-Schritt muss in den Prozessablauf zur Herstellung des optischen Moduls integriert werden. Dies erhöht den Zeitaufwand und erfordert technologisch anspruchsvolle Maskierungsschritte zum Schutz der aufgebauten optischen SiO₂-Schichten und von freiliegenden Si-Oberflächen. Hinzu kommt, dass eine selbstjustierende Ausrichtung der V-förmigen Nut zum Wellenleiter, der mit der in dieser Nut einzusetzenden Glasfaser einzukoppeln ist, sehr schwierig zu erreichen ist.

Es ist auch zu beachten, das bei V-förmigen Nutenprozessen schräge Endfacetten der zur Glasfaser zu koppelnden Komponenten im Siliziumträger durch den anisotropen Angriff entstehen. Dies beeinträchtigt merklich eine gute Kopplung zwischen der in der V-förmigen Nut eingesetzten Glasfaser und dem Wellenleiter. Daher ist meistens ein zusätzlicher Sägeschritt zur Entfernung der schrägen Endfacette notwendig.

Nicht zuletzt ist zu bemerken, dass die Strukturierung von elektrischen Leiterbahnen und Lothöckern erst nach dem Ätzen von V-förmigen Nuten möglich ist. Dies ist eine direkte Folge der benötigten Verwendung von nasschemischen Ätzlösungen, die nicht kompatibel mit einer Maskierung sind. Entsprechend ist die Strukturierung solchen Leiterbahnen und Löthöcker durch die extreme Topographie - unter anderem die schon vorhandene V-förmige Nut - besonders erschwert.

Der Erfindung liegt die Aufgabe zugrunde, eine integrierte Justagestruktur bei optischen Modulen für darauf auszurichtende Glasfaser zu konzipieren, bei deren Herstellung kein besonderer Aufwand benötigt wird und die eine sehr präzise Ausrichtung der darin einzusetzenden Glasfaser auf eine im optischen Modul integrierte Komponente ermöglicht.

Die Aufgabe wird erfindungsgemäß durch ein optisches Modul nach der Lehre des Anspruches 1 sowie durch ein Verfahren zur Herstellung eines optischen Moduls nach der Lehre des Anspruches 8 gelöst.

Die Wahl einer U-förmigen Nut als Justagestruktur für eine Glasfaser bringt viele Vorteile mit sich. Wesentlich ist dabei, dass die Strukturen für die Definition der später herzustellenden U-förmigen Nut mit derselben Maske (demselben Ätzschritt) erfolgen kann, die für die Herstellung von optischen Wellenleitern, mikromechanischen Seiten- und Höhenanschlägen, die für die Selbstjustierung von Komponenten auf das optische Module benötigt werden, verwendet werden kann. Eine genaue Strukturierung dieser U-förmigen Nut wird erreicht, insbesondere indem die äußeren Flächen, die die äußeren Kanten der Nut bilden, durch eine relativ dicke Ätzstoppschicht zwischenzeitlich geschützt bleibt. Damit wird vermieden, dass die sehr präzise hergestellte Justagestruktur nach der letzten Schichtabscheidung des Silikats (Mantelschicht) beeinträchtigt wird. Die Justagestrukturen werden mittels Trockenätzverfahren (Tiefätzen), zusammen mit der Herstellung von Wellenleiter-Endfacetten, wieder freigelegt. Dabei verhindert die Ätzstoppschicht einen Angriff dieser Justagestruktur beim Trockenätzprozess. Diese Ätzstoppschicht selbst wird für den Bereich, der zu U-förmigen Nutendefinition dient, mittels eines weiteren Trockenätzschritts, entfernt. Dies ergibt Vorteilhafterweise eine typische Terrassenstruktur zur Positionierung der Glasfaser.

Die erfindungsgemäße Justagestruktur wird zusammen mit der Endfacette der Wellenleiter - im selben Prozessschritt - auf der Siliziumscheibe gebildet, was eine sehr genaue Positionierung der beiden gewährleistet. Anschließend erfolgt die Niveauabsenkung auf die Siliziumoberfläche. Durch Einbringen der U-förmigen Nut mittels ICP-Prozess (Inductively coupled Plasma) ist es möglich, die Siliziumscheibe zuvor vollständig zu bearbeiten, und alle Strukturen lediglich mit einer Lackmaske zuverlässig zu schützen. Danach können die U-Nuten im Silizium eingebracht werden, da eine Belastung der zuvor hergestellten Strukturen weder durch aggressive Chemie noch durch hohe Temperaturen erfolgt.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der beiliegenden Zeichnungen weiter erläutert.

Es zeigen:
- Fig. 1: ein Querschnitt des erfindungsgemäßen optischen Moduls zusammen mit einer darauf ausgerichteten Glasfaser,
- Fig. 2: eine Draufsicht des erfindungsgemäßen optischen Moduls nach Fig. 1 ohne die Glasfaser.

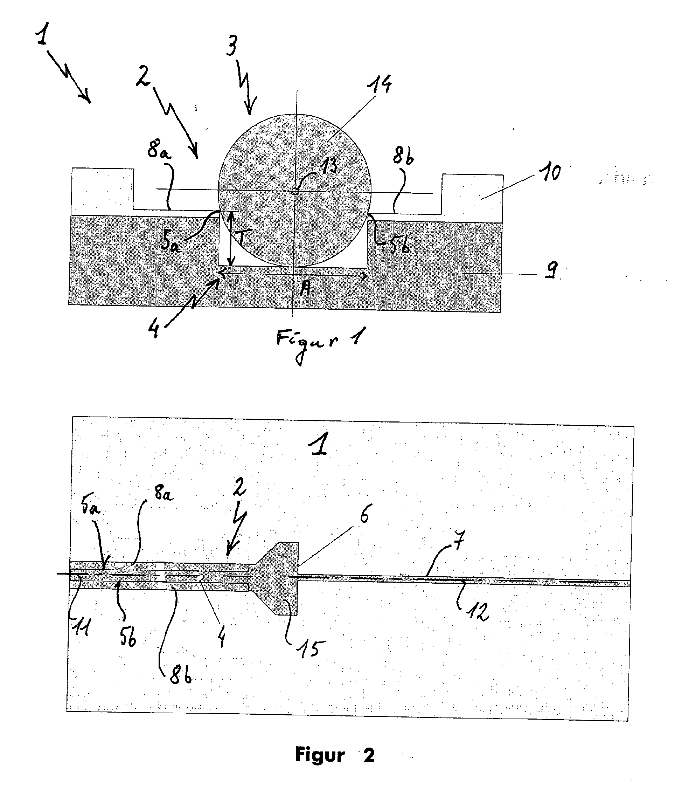

In der Fig. 1 ist ein Querschnitt eines Beispieles von einem typischen erfindungsgemäßen optischen Modul 1 dargestellt. Das optische Modul 1, das oft als Optohybrid bezeichnet wird, da es außer optischen auch gegebenenfalls elektrische Komponenten enthält, ist auf einem Träger aufgebaut, der meistens aus einer Siliziumscheibe 9 besteht. Auf diesem Träger wird eine glasartige Schicht 10 wie z.B. Silikat (SiO₂, SiON, ...) aufgebracht, in der unterschiedliche Komponente des optischen Moduls 1 strukturiert werden. Optische Signale werden dem Modul 1 über eine Glasfaser 3 übertragen, die zur genaueren Ausrichtung in eine Justagestruktur 2 in dem optischen Modul 1 integriert, eingesetzt ist. Die integrierte Justagestruktur 2 weist eine bis in der Siliziumscheibe 9 geätzte Nut 4 auf, wobei die Nut 4 als Führung für die einzusetzende Glasfaser 3 dient. Die Nut 4 ist im Querschnitt U-förmig ausgebildet, und weist zwei äußere Kanten 5a, 5b auf, die parallel zu der darin einzusetzenden Glasfaser 3 verlaufen und als Führungslinien mit letzterer dienen. Diese Kanten müssen nicht durchgehend entlang der gesamten Nutlänge angebracht werden, denn zur Ausrichtung der Glasfaser 3 kann gegebenenfalls nur ein kurzes Stück am Ende der Nut 4 hinreichend sein. Im gezeigten Beispiel auf Figur 1, sind diese Kanten 5a, 5b, die Kanten von zwei äußeren Flächen 8a, 8b der Glasschicht 10, die die Stege der Nut 4 überdecken.

Die Fig. 2 zeigt eine Draufsicht des optischen Moduls 1 nach Fig. 1 ohne die Glasfaser 3. Deutlich zu erkennen ist die integrierte Justagestruktur 2, die zu einer Komponente, hier einem optischen Wellenleiter 7, des optischen Moduls 1 ausgerichtet ist. Die Mitte der U-förmige Nut 4 der integrierten Justagestruktur 2 ist auf der Fortsetzung 11 der optischen Achse 12 des optischen Wellenleiters 7 positioniert. Somit wird die Glasfaser 3, die in diese integrierte Justagestruktur 2 eingesetzt wird, einer Endfacette 6 des optischen Wellenleiters 7 gegenüber stehen. Die äußeren Kanten 5a, 5b sind entsprechend rechtwinklig zu dieser Endfacette 6 ausgerichtet.

Die Öffnung der Nut 4, d.h. die Tiefe T als auch der Abstand A zwischen den zwei äußeren Kanten 5a, 5b sind derart ausgewählt, dass der Kern 13 der in die Nut 4 einzusetzenden Glasfaser 3 leicht oberhalb des Grenzbereichs zwischen der Siliziumscheibe 9 des optischen Moduls 1 und der Glasschicht 10 liegt. Zu erzielen ist, dass der Kern 13 einen Bereich der Endfacette 6 gegenübersteht, der genau zu dem in der Glasschicht 10 integrierten optischen Wellenleiter 7 führt. Entsprechend müssen dann die optische Achse des Kerns 13 mit der optischen Achse 12 des Wellenleiters 7 so genau wie möglich zusammen fallen, um eine bestmögliche Kopplung zwischen der Glasfaser 3 und dem Wellenleiter 7 zu gewährleisten. Sowohl die Tiefe T als auch der Abstand A können entsprechend der einzusetzenden Glasfaser 3, d.h. unter anderem der Dicke der Schutzschicht 14 (Cladding) der Glasfaser 3 und der gewünschten Kopplung mit der integrierten Komponente des optischen Moduls 1 abgestimmt werden.

Das erfindungsgemäße Verfahren zur Herstellung dieser integrierten Justagestruktur 2 besteht darin, die selbe Maske sowohl für die Justagestruktur 2 als auch für die zur Glasfaser 3 zu koppelnden Komponente des optischen Moduls (in dem gezeigten Beispiel in Fig. 2 den optischen Wellenleiter 7) bei der Strukturierung auf dem optischen Modul 1 zu verwenden. Dies bedeutet, dass derselbe Ätzschritt sowohl die integrierte Justagestruktur 2 als auch die Endfacette 6 des optischen Wellenleiters 7 auf der die Glasfaser 3 ausgerichtet wird, ergeben wird. Hierfür werden zusammen mit dem Wellenleiter 7, zwei parallele Stützen in der selben Glasschicht 10 strukturiert. Diese Stützen dienen zur Begrenzung der zu ätzenden Nut 4, und werden im späteren Trockenätzverfahren zu deren äußeren Kanten 5a, 5b führen.

Damit die sehr präzise hergestellten äußeren Kanten 5a, 5b der U-förmigen Nut 4 während der Schichtabscheidung des Silikats (SiO₂, SiON, ...) geschützt bleibt, werden die äußeren Flächen 8a, 8b zwischenzeitlich mit einer Ätzstoppschicht geschützt. Diese Ätzstoppschicht verhindert somit einen Angriff beim Trockenätzprozess während des Tiefätzens der Nut 4 zusammen mit der Endfacette 6 des optischen Wellenleiters 7. Nach Entfernung der Ätzstoppschicht werden die äußeren Flächen 8a, 8b ohne weitere Maskierungsschritte auf typischerweise 3 bis 4 *µ*m Dicke dünner gemacht. Danach erfolgt mittels ICP-Verfahrens das Einbringen der Nut 4, die im Unterschied zu der Figur 1 zu einem schwalbenschwanz-förmigen anstelle des U-förmigen Querschnitts führen wird. Dies wird keine besondere Beeinträchtigung bei der Justagegenauigkeit der Glasfaser 3 mit sich bringen, da diese Justagegenauigkeit im wesentlichen durch die Kanten 5a, 5b der Nut 4 bedingt ist. Diese Kanten 5a, 5b dienen deshalb als Führungslinien für die Glasfaser 3, die in die integrierte Justagestruktur 2 eingesetzt wird.

Der bereits begonnene Tiefätzschritt wird fortgesetzt, bis die Oberfläche der Siliziumscheibe 9 erreicht wird. Dies ergibt die typische endgültigen Terrassenstrukturen der äußeren Flächen 8a, 8b zur Positionierung der Glasfaser 3, wie sie auf den Fig. 1 und 2 gezeichnet wurden.

Durch Einbringen von U-förmigen Nuten 4 mittels eines induktiv gekoppelten Plasma-Prozesses (ICP), ist es möglich, die Siliziumscheibe 9 zuvor vollständig zu bearbeiten und alle Strukturen lediglich mit einer Lackmaske zuverlässig zu schützen. Dadurch wird diese Siliziumscheibe 9 von aggressiver Chemie verschont und/oder auch nicht unter zu hohen Temperaturen gesetzt. Dies erleichtert erheblich das nachträgliche Einbringen von U-Nuten auf deren Oberfläche.

Nachdem alle nachfolgenden Prozess-Schritte (z.B. elektrische Leiter und Lothöcker) durchgeführt wurden, werden alle Strukturen mittels Fotolack großzügig geschützt. Nur noch der Bereich mit der U-förmigen Nut 4 und die Endfacette 6 des optischen Wellenleiters 7 bleiben frei. Im anschließenden Trockenätzverfahren wird die gewünschte Tiefe T der Nut 4 festgelegt. Zum Schluss können nun die optischen/elektrischen Komponenten und die Glasfaser 3 sehr präzise und einfach montiert werden. Fixiert wird die Glasfaser in der Nut 4 mit Hilfe Klebstoff, der gegebenenfalls in einem zwischen dem Ende der Nut 4 und der Endfacette 6 hierzu vorgesehenen Klebereservoir 15 eingebracht wird, wie es im gezeigten Beispiel auf der Figur 2 gezeichnet ist. Das Klebereservoir 15 ist aber nicht zwingend nötig. Der Klebstoff kann auch z.B. über kapillare Kräfte entlang der Glasfaser 3 sich verteilen. Dies kann auch eine zufrieden stellenden Lösung der Fixierung der Glasfaser ergeben.

## Patentansprüche

1. Optisches Modul (1) mit integrierter Justagestruktur (2) zur Ausrichtung von mindestens einer darin einzusetzenden Glasfaser (3) auf eine im optischen Modul (1) integrierte Komponente (7), wobei die Justagestruktur (2) mindestens eine Nut (4) mit mindestens abschnittsweise zwei äußeren Kanten (5a, 5b) aufweist, wobei letztere als Führung für die in die Nut (4) einzusetzende Glasfaser (3) dienen.

2. Optisches Modul (1) nach Anspruch 1, **dadurch gekennzeichnet, dass** die Nut (4) einen U-artigen Querschnitt aufweist.

3. Optisches Modul (1) nach Anspruch 1, **dadurch gekennzeichnet, dass** die Nut (4) einen Schwalbenschwanz-artigen Querschnitt aufweist.

4. Optisches Modul (1) nach Anspruch 1, **dadurch gekennzeichnet, dass** die äußeren Kanten (5a, 5b) der Nut (4) rechtwinklig zu einer der Glasfaser (3) gegenüberliegenden Endfacette (6) der zur Glasfaser (3) zu koppelnden Komponente (7) des optischen Moduls (1) ausgerichtet sind.

5. Optisches Modul (1) nach Anspruch 1, **dadurch gekennzeichnet, dass** die äußeren Kanten (5a, 5b) der Nut (4) im gleichen Material des optischen Moduls (1), wie die zu der Glasfaser (3) zu koppelnden Komponente (7), strukturiert sind.

6. Optisches Modul (1) nach Anspruch 1, **dadurch gekennzeichnet, dass** der Abstand (A) zwischen den zwei äußeren Kanten (5a, 5b) der Nut (4) kleiner als der Durchmesser der darin einzusetzenden Glasfaser (3) ist.

7. Optisches Modul (1) nach Anspruch 6, **dadurch gekennzeichnet, dass** die Nut (4) sowohl eine Ausrichtung als auch Abmessungen (T, A) aufweist, die dazu führen, dass die optische Achse (11) der in die Nut (4) einzusetzenden Glasfaser (3) mit der optischen Achse (12) der integrierten Komponente (7) auf der die Glasfaser (3) ausgerichtet ist, zusammen fällt.

8. Verfahren zur Herstellung eines optischen Moduls (1), bei dem zum Zweck photolithographischer Strukturierung die selbe Maske sowohl für eine Justagestruktur (2) nach Anspruch 1 als auch für die im optischen Modul (1) integrierte Komponente (7), verwendet wird.

9. Verfahren zur Herstellung eines optischen Moduls (1) nach Anspruch 8, **dadurch gekennzeichnet, dass** nach der Belichtung dieser Maske auf dem optischen Modul (1) und mit der Bildung der integrierten Komponente (7), zwei parallel laufende Stützen in der selben Schicht mitgebildet werden, die anschließend mit einer Ätzstoppschicht geschützt werden, und zur Begrenzung der zu ätzender Nut (4) dienen.

10. Verfahren zur Herstellung eines optischen Moduls (1) nach Anspruch 9, **dadurch gekennzeichnet, dass** die Nutbegrenzung zusammen mit der der Glasfaser (3) gegenüberliegenden Endfacette (6) der zur Glasfaser (3) zu koppelnden Komponente (7) des optischen Moduls (1) im selben Ätzvorgang im optischen Modul (1) gebildet werden.

11. Verfahren zur Herstellung eines optischen Moduls (1) nach Anspruch 10, **dadurch gekennzeichnet, dass** die von der Ätzstoppschicht geschützten Stützen durch Trockenätzverfahren zu den äußeren Kanten (5a, 5b) der Nut (4) führen.
